# EUROPEAN PATENT APPLICATION

(11) **EP 4 391 647 A1**
(43) Date of publication of application: **26.06.2024**
(21) Application number: 22872128.8
(22) Date of filing: 23.09.2022
(51) Int. Cl.: H04W 36/00

(54) **NETWORK ACCESS METHOD AND APPARATUS**

(30) Priority: 24.09.2021 CN 202111119733
(71) Applicant: Huawei Technologies Co., Ltd., Shenzhen, Guangdong 518129 (CN)
(72) Inventor: SUN, Shunli, Shenzhen, Guangdong 518129 (CN); LI, Changhai, Shenzhen, Guangdong 518129 (CN); LV, Cong, Shenzhen, Guangdong 518129 (CN); ZHANG, Yuchao, Shenzhen, Guangdong 518129 (CN); YANG, Lin, Shenzhen, Guangdong 518129 (CN)
(74) Representative: Huawei European IPR
(86) International application number: PCT/CN2022/120947
(87) International publication number: WO 2023/046084

(57) **Abstract**

This application relates to a network access method and apparatus. The method includes: sending a first registration request message; receiving a first registration failure message; sending a second registration request message when a registration failure cause indicated in the first registration failure message is that an APN carrying manner is incorrect; and when a second registration success message is received, performing network connection, where when the first registration request message carries an access point name APN, the second registration request message does not carry an APN; or when the first registration request message does not carry an APN, the second registration request message carries an APN. The method may be used to avoid network access failure as far as possible when network configuration at a network side on whether an APN is carried in a registration Attach phase is inconsistent with configuration at a terminal device side on whether an APN is carried to a network side in a registration Attach phase.

## Description

### CROSS-REFERENCE TO RELATED APPLICATIONS

This application claims priority to Chinese Patent Application No. 202111119733.3, filed with the China National Intellectual Property Administration on September 24, 2021 and entitled "NETWORK ACCESS METHOD AND APPARATUS", which is incorporated herein by reference in its entirety.

### TECHNICAL FIELD

Embodiments of this application relate to the field of terminal technologies, and in particular, to a network access method and apparatus.

### BACKGROUND

An access point name (Access Point Name, APN) is a parameter that needs to be configured for a terminal device when the terminal device accesses a network, and the parameter determines an access manner used to access the network. An evolved packet system session management (EPS (Evolved Packet System) Session Management, ESM) flag (flag) is locally set on the terminal device. When the ESM flag is set to 0, an APN is not carried to a network side in a registration Attach phase of network access, or when the ESM flag is set to 1, an APN is carried to a network side in a registration Attach phase. Similarly, the network side also performs network configuration on whether an APN is carried in an Attach phase.

However, network configuration of a carrier network is often updated. Therefore, when network configuration at a network side on whether an APN is carried in an Attach phase is inconsistent with configuration at the terminal device side on whether an APN is carried to a network side in an Attach phase due to such update, registration fails, and consequently, network access fails.

In addition, because some carriers may have a plurality of subnets, network configuration on whether an APN is carried in an Attach phase may vary among different subnets. When the terminal device is handed over to a different subnet, when network configuration at a network side on whether an APN is carried in an Attach phase is inconsistent with configuration at the terminal device side on whether an APN is carried to a network side in an Attach phase, registration also fails, and consequently, network access fails.

Based on this, an urgent problem needs to be resolved: how to avoid network access failure as far as possible when network configuration at a network side on whether an APN is carried in an Attach phase is inconsistent with configuration at a terminal device side on whether an APN is carried to a network side in an Attach phase.

### SUMMARY

Embodiments of this application provide a network access method and apparatus, to avoid network access failure as far as possible when network configuration at a network side on whether an APN is carried in a registration Attach phase is inconsistent with configuration at a terminal device side on whether an APN is carried to a network side in a registration Attach phase.

According to a first aspect, an embodiment of this application provides a network access method. The method may be performed by a network access apparatus. The network access apparatus may be a terminal device, or a network access apparatus that may implement a function required in the method, for example, a component included in the terminal device, or a chip in the terminal device. For example, the method is performed by a terminal device. The method includes: A terminal device sends a first registration request message; the terminal device receives a first registration failure message; the terminal device sends a second registration request message when a registration failure cause indicated in the first registration failure message is that a manner of carrying an access point name APN is incorrect; and when a second registration success message is received, the terminal device performs network connection, where when the first registration request message carries an APN, the second registration request message does not carry an APN; or when the first registration request message does not carry an APN, the second registration request message carries an APN.

According to the foregoing solution, when network configuration at a network side on whether an APN is carried in an Attach phase is inconsistent with configuration at a terminal device side on whether an APN is carried to a network side in an Attach phase, when registration fails after the first registration request message is sent, the terminal device may automatically send the second registration request message to perform registration, so that network access failure can be avoided as far as possible.

In a possible implementation, when the first registration request message carries an APN and the second registration request message does not carry an APN, the second registration success message carries an APN allocated by a network side.

In a possible implementation, the performing network connection includes: The terminal device sends a first connection request message, where the first connection request message carries a first APN in a preset APN list; the terminal device receives a first connection failure message; and when a connection failure cause indicated in the first connection failure message is that a carried APN is incorrect, the terminal device polls a second APN in the preset APN list to perform network connection until connection succeeds; or the terminal device polls a second APN in the preset APN list to perform network connection until connection failure is still received after polling of each APN in the preset APN list is completed; or the terminal polls a second APN in the preset APN list to perform network connection until connection failure is still received after polling of each APN in the preset APN list is completed, and performs network connection based on the APN allocated by the network side, where the second APN is an APN other than the first APN in the preset APN list.

In the foregoing solution, in a network connection process, when connection fails because a carried APN is incorrect, another APN is polled to perform network connection, so that network access failure can be further avoided.

In addition, when connection still fails after the polling is completed, network connection may be performed based on the APN allocated by the network side in a registration process, so that network access failure can be further avoided.

In a possible implementation, the performing network connection includes: The terminal device sends a first connection request message, where the first connection request message carries a first APN in a preset APN list; the terminal device receives a deregistration message; the terminal device sends a third registration request message, where the third registration request message does not carry an APN; the terminal device receives a third registration success message, where the third registration success message carries the APN allocated by the network side; and the terminal device performs network connection based on the APN allocated by the network side.

In the foregoing solution, in a network connection process, when deregisteration is performed by the network side, registration is performed again, and after registration succeeds, the terminal device performs network connection based on the APN allocated by the network side in a registration process, so that network access failure can be further avoided.

In a possible implementation, the performing network connection includes: The terminal device performs network connection based on the APN allocated by the network side.

In the foregoing solution, in a network connection process, network connection is directly performed based on the APN allocated by the network side in a registration process, so that network access failure can be further avoided.

In a possible implementation, when the first registration request message does not carry an APN, and the second registration request message carries an APN, the second registration request message carries a first APN in a preset APN list.

In a possible implementation, the performing network connection includes: performing network connection based on the first APN.

In the foregoing solution, in a network connection process, the network connection is directly performed based on the APN carried in a registration success process, so that network access failure can be further avoided.

In a possible implementation, after the sending a second registration request message, the method further includes: when a second registration failure message is received and a registration failure cause indicated in the second registration failure message is that a carried APN is incorrect, polling a second APN in the preset APN list to perform registration until registration succeeds, or polling a second APN in the preset APN list to perform registration until registration still fails after polling of each APN in the preset APN list is completed, where the second APN is an APN other than the first APN in the preset APN list.

In the foregoing solution, in a registration process, when registration fails because a carried APN is incorrect, another APN is polled to perform registration, so that network access failure can be further avoided.

In a possible implementation, after the polling a second APN in a preset APN list to perform registration until registration succeeds, the method further includes: performing network connection based on the second APN corresponding to the successful registration.

In the foregoing solution, network connection is directly performed based on the APN carried in a registration success process, so that network access failure can be further avoided.

In a possible implementation, the receiving a first registration failure message includes: A local modem Modem receives the first registration failure message, and forwards the first registration failure message to a local application processor AP. The sending a second registration request message when a registration failure cause indicated in the first registration failure message is that an APN carrying manner is incorrect, includes: When determining that the registration failure cause indicated in the first registration failure message is that an APN carrying manner is incorrect, the AP queries the Modem for an ESM flag, where when the ESM flag is 0, the ESM flag indicates that the registration request message does not carry an APN, or when the ESM flag is 1, the ESM flag indicates that the registration request message carries the APN; and when the ESM flag is 0, the AP commands the Modem to modify the ESM flag to 1; or when the ESM flag is 1, the AP commands the Modem to modify the ESM flag to 0; and the Modem sends the second registration request message based on a modified ESM flag.

In a possible implementation, the network access apparatus supports access to at least one of a long term evolution LTE network and a fifth generation mobile communication 5G network.

According to a second aspect, an embodiment of this application provides a network access apparatus. The apparatus includes a processor and a memory. The memory is configured to store a computer-executable program. The processor is configured to execute the computer-executable program in the memory, so that the method according to any one of the implementations of the first aspect is performed.

According to a third aspect, an embodiment of this application provides a network access apparatus. The apparatus includes a module configured to perform the method according to any one of the implementations of the first aspect.

According to a fourth aspect, an embodiment of this application provides a computer-readable storage medium. The computer-readable storage medium includes a computer program, and when the computer program is run on an electronic device, the electronic device is enabled to perform the method according to any one of the implementations of the first aspect.

According to a fifth aspect, an embodiment of this application provides a computer program product. When the computer program product runs on a computer, the computer is enabled to perform the method according to any one of the implementations of the first aspect.

For technical effects corresponding to the second aspect, the third aspect, the fourth aspect, the fifth aspect, and any one of the implementations of the second aspect, the third aspect, the fourth aspect, and the fifth aspect, refer to technical effects of the first aspect and any one of the implementations of the first aspect. Details are not described herein again.

In an embodiment of this application, based on the implementations according to the foregoing aspects, the implementations may be further combined to provide more implementations.

### BRIEF DESCRIPTION OF DRAWINGS

FIG. 1 is a schematic diagram of an architecture of a communication system to which an embodiment of this application is applied;
FIG. 2 is a schematic diagram of an application scenario according to an embodiment of this application;
FIG. 3 is a schematic diagram of another application scenario according to an embodiment of this application;
FIG. 4 is a schematic diagram of a structure of a terminal device according to an embodiment of this application;
FIG. 5 is a schematic flowchart of a network access method according to an embodiment of this application;
FIG. 6 is a schematic flowchart of a network access method according to an embodiment of this application;
FIG. 7 is a schematic flowchart of a network access method according to an embodiment of this application;
FIG. 8 is a schematic flowchart of a network access method according to an embodiment of this application;
FIG. 9 is a schematic flowchart of a network access method according to an embodiment of this application; and
FIG. 10 is a schematic diagram of a structure of a network access apparatus according to an embodiment of this application.

### DESCRIPTION OF EMBODIMENTS

The following describes technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one or at least two (including two). The term "and/or" is used to describe an association relationship between associated objects and represents that three relationships may exist. For example, A and/or B may represent the following cases: Only A exists, both A and B exist, and only B exists, where A and B each may be singular or plural. A character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

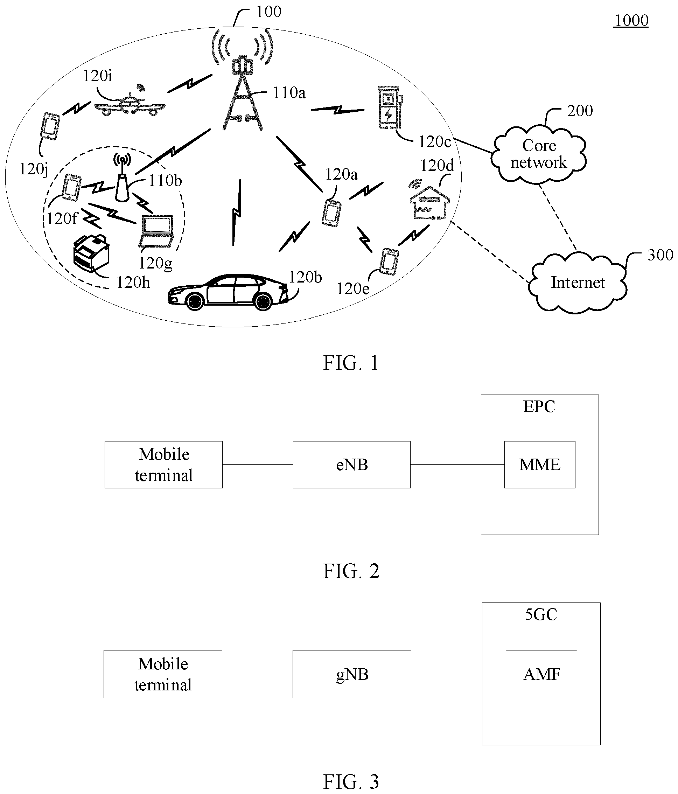

For example, FIG. 1 is a schematic diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different independent physical devices, or functions of the core network device and logical functions of the radio access network device are integrated into a same physical device, or some functions of the core network device and some functions of the radio access network device are integrated into one physical device. The terminals may be connected to each other in a wired or wireless manner, and the radio access network devices may be connected to each other in a wired or wireless manner. FIG. 1 is merely a schematic diagram. The communication system may further include another core network element, for example, may further include a wireless relay device and a wireless backhaul device that are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like, or may be a module or a unit that implements some functions of a base station, for example, may be a central unit (central unit, CU), or may be a distributed unit (distributed unit, DU). The CU implements functions of a radio resource control protocol and a packet data convergence protocol (packet data convergence protocol, PDCP) of the base station, and may further implement a function of a service data adaptation protocol (service data adaptation protocol, SDAP). The DU implements functions of a radio link control layer and a media access control (medium access control, MAC) layer of the base station, and may further implement functions of some or all physical layers. For specific descriptions of the foregoing protocol layers, refer to related technical specifications of a 3rd generation partnership project (3rd generation partnership project, 3GPP). The radio access network device may be a macro base station (for example, 110a in FIG. 1), or may be a micro base station or an indoor station (for example, 110b in FIG. 1), or may be a relay node or a donor node. A specific technology and a specific device form that are used by the radio access network device are not limited in embodiments of this application. For ease of description, the following uses an example in which the base station is used as the radio access network device for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine-type communication (machine-type communication, MTC), internet of things (internet of things, IoT), virtual reality, augmented reality, industrial control, self-driving, remote medical care, smart grid, smart home, smart office, smart wearables, intelligent transportation, smart city, or the like. The terminal may be a mobile phone, a tablet computer, a computer with a wireless transceiver function, a wearable device, a vehicle, an uncrewed aerial vehicle, a helicopter, an aircraft, a ship, a robot, a mechanical arm, a smart home device, a CPE (Customer Premise Equipment, customer terminal equipment), or the like. A specific technology and a specific device form that are used by the terminal are not limited in embodiments of this application.

The base station and the terminal may be located at a fixed location, or may be mobile. The base station and the terminal may be deployed on land, for example, may be deployed indoors or outdoors or in a handheld manner or a vehicle-mounted manner, may be deployed on a water surface, or may be deployed on an aircraft, a balloon, and a satellite in the air. An application scenario of the base station and the terminal is not limited in embodiments of this application.

Roles of the base station and the terminal may be relative. For example, a helicopter or an uncrewed aerial vehicle 120i in FIG. 1 may be configured as a mobile base station. For a terminal 120j that accesses the radio access network 100 by using 120i, the terminal 120i is a base station. However, for a base station 110a, 120i is a terminal. In other words, 110a and 120i communicate with each other by using a radio air interface protocol. Certainly, 110a and 120i may alternatively communicate with each other by using an interface protocol between base stations. In this case, for 110a, 120i is also a base station. Therefore, both the base station and the terminal may be collectively referred to as a communication apparatus. 110a and 110b in FIG. 1 may be referred to as a communication apparatus that has a base station function, and 120a to 120j in FIG. 1 may be referred to as a communication apparatus that has a terminal function.

Communication between a base station and a terminal, between a base station and a base station, or between a terminal and a terminal may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem that includes a base station function. The control subsystem that includes a base station function may be a control center in the foregoing application scenarios such as a smart grid, an industrial control, an intelligent transportation, and a smart city. A function of the terminal device may alternatively be performed by a module (for example, a chip or a modem) in the terminal device, or may be performed by an apparatus that includes a function of the terminal device.

In this application, the base station sends a downlink signal or downlink information to the terminal, and the downlink information is carried on a downlink channel. The terminal sends an uplink signal or uplink information to the base station, and the uplink information is carried on an uplink channel. To communicate with the base station, the terminal needs to establish a wireless connection to a cell controlled by the base station. A cell that establishes a wireless connection to the terminal is referred to as a serving cell of the terminal. When communicating with the serving cell, the terminal is further interfered with by a signal from a neighboring cell.

The terminal device may establish a connection to a carrier network through an interface (for example, N1) provided by the carrier network, and use a service such as data and/or voice provided by the carrier network. The terminal device may further access a DN through the carrier network, and use a carrier service deployed on the DN and/or a service provided by a third party. The third party may be a service provider other than the carrier network and the terminal device, and may provide data and/or voice services or the like to the terminal device. A specific representation form of the third party may be specifically determined based on an actual application scenario, and is not limited herein.

It may be understood that, the base station and the terminal include corresponding hardware structures and/or software modules for performing the functions. A person skilled in the art should be easily aware that this application can be implemented by hardware or a combination of hardware and computer software in combination with units and method steps in the examples described in embodiments disclosed in this application. Whether a function is performed by hardware or hardware driven by computer software depends on particular application scenarios and design constraints of the technical solutions.

For ease of understanding the solutions in embodiments of this application, the following first explains and describes some terms or nouns in embodiments of this application.
1. APN: indicates a parameter needs to be configured for a terminal device when the terminal device accesses a network, and the parameter determines an access manner used to access the network.
2. Network access: Network access is divided into two phases: an Attach phase and a network connection phase. Only after both the Attach and network connection succeed, network access can succeed. For example, in a 4G network, when initiating a packet service, a terminal may provide an APN to an MME (Mobility Management Entity, mobility management entity), and the MME obtains an IP address based on the APN provided by the terminal, so that the terminal accesses a PDN (Packet Data Network, packet data network) that is corresponding to the APN. For another example, in a 5G network, when initiating a data service, a terminal may provide an APN to an AMF (Access and Mobility Management Function, access and mobility management function), and the AMF obtains an IP address based on the APN provided by the terminal, so that the terminal accesses a DN (Data Network, data network) that is corresponding to the APN.
3. Attach: means registration, and is also referred to as Attach. To obtain a network service, a terminal device needs to first register with a network. Such registration process is referred to as Attach.
4. Network connection: After Attach succeeds, network connection needs to be performed so that network access may succeed. A purpose of network connection is to establish an EPS bearer, or the like.
5. ESM flag: is used to mark whether a terminal device carries an APN to a network side in an Attach phase. If the ESM flag is 0, it is indicated that an APN is not carried to a network side in an Attach phase, or if the ESM flag is 1, it is indicated that an APN is carried to a network side in an Attach phase. ESM flag configuration at a terminal device side needs to be the same as ESM flag configuration at a network side.
   For example, if a terminal device uses a registration solution in which an ESM flag is 0, a network side also needs to configure a manner in which an APN is not carried in an Attach phase. If the network side configures a manner in which an APN is carried in an Attach phase, registration of the terminal device is rejected, causing network access failure. For another example, if a terminal device uses a registration solution in which an ESM flag is 1, a network side also needs to configure a manner in which an APN is carried in an Attach phase. If the network side configures a manner in which an APN is not carried in an Attach phase, registration of the terminal device is rejected, causing network access failure.
6. Detach: means deregistration, that is, a terminal device is deregistered in a subsequent process in which the terminal device interacts with a network after the terminal device registers successfully.

Based on the foregoing content, the following first briefly describes several application scenarios provided in the network access solution in this embodiment.

### Application scenario 1

After subscribing to a long term evolution (Long Term Evolution, LTE) service, when a terminal device is powered on and accesses a network for the first time, the terminal device needs to access an LTE network, so that the terminal device can access a PDN (Packet Data Network, packet data network) to use a data service. Specifically, to access the LTE network, the terminal device first needs to register with an LTE core network, which is also referred to as a packet core network (Evolved Packet Core, EPC), by using an LTE access network device, and then perform network connection, to successfully access the LTE network.

As shown in FIG. 2, an example in which the terminal device is a mobile terminal and the LTE access network device is an eNB is used. An EPC in FIG. 2 includes a mobility management entity (Mobility Management Entity, MME), and further includes another core network element (not shown), which is merely an example for description.

When the mobile terminal is powered on and accesses an LTE network for the first time, the mobile terminal needs to register with the EPC through the eNB. If registration fails, network access fails.

It should be noted that, that the terminal device is a mobile terminal is merely an example for description, and the terminal device may alternatively be another terminal mentioned above, for example, may be a CPE. That the LTE access network device is an eNB is merely an example for description, and the LTE access network device may alternatively be another access network device mentioned above, for example, a building baseband unit (Building BaseBand Unit, BBU).

In addition, the moment mentioned above in which a terminal device is powered on and accesses a network for the first time is merely an example for description, and may be another moment, for example, a moment in which the terminal device enters an LTE network coverage area again after leaving the LTE network coverage area for a period of time.

### Application scenario 2

After subscribing to a 5th generation mobile communication technology (5th Generation Mobile Communication Technology, 5G) service, when a terminal device is powered on and accesses a network for the first time, the terminal device needs to access a 5G network, so that the terminal device can access a DN (Data Network, data network) to use a data service. Specifically, to access the 5G network, the terminal device first needs to register with a 5G core (New Core, 5GC) network, by using a 5G access network device, and then perform network connection, to successfully access the 5G network.

As shown in FIG. 3, an example in which the terminal device is a mobile terminal and the 5G access network device is a gNB is used. A 5GC in FIG. 3 includes an access and mobility management function (Access and Mobility Management Function, AMF), and further includes another core network element (not shown), which is merely an example for description.

When the mobile terminal is powered on and accesses a 5G network for the first time, the mobile terminal needs to register with the 5GC through the gNB. If registration fails, network access fails.

It should be noted that, that the terminal device is a mobile terminal is merely an example for description, and the terminal device may alternatively be another terminal mentioned above, for example, may be a CPE. That the 5G access network device is a gNB is merely an example for description, and the 5G access network device may alternatively be another access network device mentioned above, for example, a building baseband unit (Building BaseBand Unit, BBU).

In addition, the moment mentioned above in which a terminal device is powered on and accesses a network for the first time is merely an example for description, and may be another moment, for example, a moment in which the terminal device enters a 5G network coverage area again after leaving the 5G network coverage area for a period of time.

In addition, it should be noted that the foregoing scenarios are merely examples for description, and may alternatively be another scenario in which network connection needs to be performed.

The following describes in detail a structure of the terminal device mentioned in the foregoing scenario 1, scenario 2, and the like.

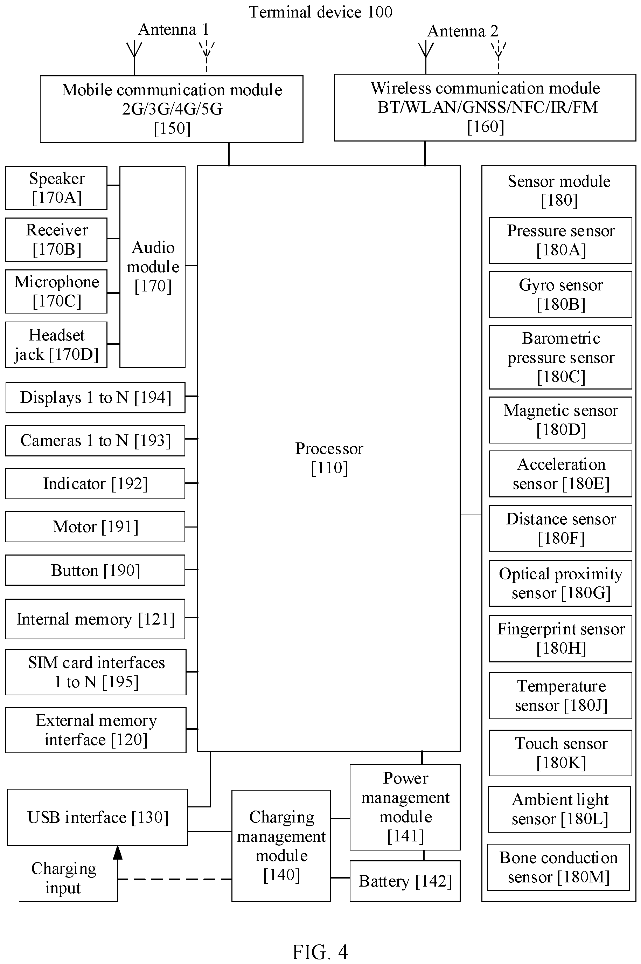

For example, FIG. 4 is a schematic diagram of a hardware structure of a terminal device 100. As shown in FIG. 4, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem (modem) processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The terminal device 100 implements a display function by using the GPU, the display 194, the application processor, and the like. The GPU is a microprocessor for image processing and is connected to the display 194 and the application processor. The GPU is configured to perform mathematical and geometric computation for graphic rendering. The processor 110 may include one or more GPUs that execute program instructions to generate or change display information.

The terminal device 100 may implement a photographing function by using the ISP, the camera 193, the video codec, the GPU, the display 194, the application processor, and the like.

The SIM card interface 195 is configured to connect a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 may be compatible with different types of SIM cards. The SIM card interface 195 may alternatively be compatible with an external storage card. The terminal device 100 interacts with a network by using the SIM card, to implement functions such as making a calling and data communication. In some embodiments, the terminal device 100 uses an eSIM, that is, an embedded SIM card.

A wireless communication function of the terminal device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the terminal device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antennas may be used in combination with a tuning switch.

The mobile communication module 150 may provide a solution, applied to the terminal device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared radiation (infrared radiation, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device 100 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, and IR technology, and/or the like.

It should be noted that the structure shown in FIG. 4 in this embodiment of this application does not constitute a specific limitation on the terminal device 100. In some other embodiments of this application, the terminal device 100 may include more or fewer components than those shown in FIG. 4, or some components may be combined, or some components may be split, or different component arrangements may be used. The components shown in the figure may be implemented by hardware, software, or a combination of software and hardware.

The following describes in detail a detailed process of the network access mentioned in the foregoing application scenario 1, application scenario 2, and the like.

It should be noted that information between a terminal device and a core network element, which is mentioned below, needs to be transmitted by using an access network device, and the access network device is not shown in the figure. For example, in an EPC, the core network element may be an MME, and in a 5GC, the core network element may be an AMF.

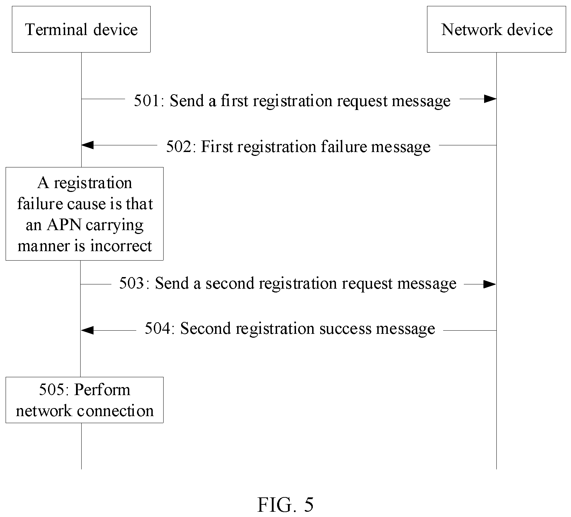

For example, FIG. 5 is a schematic flowchart of a network access method according to an embodiment of this application. As shown in FIG. 5, the method includes the following steps.

S501: A terminal device sends a first registration request message to a core network element, and correspondingly, the core network element receives the first registration request message.

An ESM flag is preset locally in the terminal device, and the ESM flag is used to mark whether the terminal device carries an APN to a network side in an Attach phase. If the ESM flag is 0, it is indicated that an APN is not carried to a network side in an Attach phase, or if the ESM flag is 1, it is indicated that an APN is carried to a network side in an Attach phase.

Specifically, when the ESM flag is 0, the first registration request message does not carry an APN. When the ESM flag is 1, the first registration request message carries an APN.

For example, a registration request message may be an Attach request (Attach request) message. The Attach request message may further carry another parameter such as a flag of a terminal device, or the like.

In an example, the terminal device may trigger registration when the terminal device is powered on, or may trigger registration when entering network coverage again after leaving the network coverage.

For example, a local application processor AP side (for example, the application processor AP included in the processor 110 shown in FIG. 4) of the terminal device stores a preset APN list, and a local modem (Modem) side (for example, the modem (modem) processor included in the processor 110 shown in FIG. 4) of the terminal device stores a preset ESM flag. The AP side may command the Modem side to initiate registration, and then the Modem side sends a registration request message based on the stored ESM flag. Specifically, the AP side may first query the Modem side for a current ESM flag and command the Modem side to initiate registration. For example, the AP side queries the Modem side for a current ESM flag, and the Modem side sends the current ESM flag to the AP side. When the ESM flag is 0, the AP side commands the Modem side to initiate registration, and the Modem side sends a registration request message that does not carry an APN. When the ESM flag is 1, the AP side commands the Modem side to initiate registration, and the command further carries information such as an APN, so that the Modem side sends a registration request message carrying information such as the APN.

S502: The core network element sends a first registration failure message to the terminal device, and correspondingly, the terminal device receives the first registration failure message.

The first registration failure message is sent when it is determined that the first registration request message does not conform to network configuration at a core network element side on whether an APN is carried in an Attach phase.

For example, when the first registration request message carries an APN, but configuration at the core network element side is that an APN is not carried in an Attach phase, it is determined that the first registration request message does not conform to the network configuration, in which an APN is not carried in an Attach phase, at the core network element side, and registration fails.

For another example, when the first registration request message does not carry an APN, but configuration at the core network element side is that an APN is carried in an Attach phase, it is determined that the first registration request message does not conform to the network configuration, in which an APN is carried in an Attach phase, at the core network element side, and registration fails.

The registration failure message may be an Attach reject (Attach reject) message, and the attach reject message may carry information that indicates a registration failure cause. For example, the information that indicates the registration failure cause may be error code #33, to indicate that an APN carrying manner is incorrect.

S503: When a registration failure cause indicated in the first registration failure message is that an APN carrying manner is incorrect, the terminal device sends a second registration request message, and correspondingly, the core network element receives the second registration request message.

When the first registration request message carries an APN, the second registration request message does not carry an APN; or when the first registration request message does not carry an APN, the second registration request message carries an APN.

The registration failure message carries information that indicates the registration failure cause, and the registration failure cause may be determined based on the information that indicates the registration failure cause. For example, when information that indicates a registration failure cause is error code #33, it is indicated that the registration failure cause is that an APN carrying manner is incorrect. To be specific, when the first registration request message carries an APN, the error code #33 indicates that the registration failure cause is that the first registration request message carries an APN. When the first registration request message does not carry an APN, the error code #33 indicates that the registration failure cause is that the first registration request message does not carry an APN.

For example, the Modem side may receive the first registration failure message, and forward the first registration failure message to the local application processor AP side. When determining that the registration failure cause indicated in the first registration failure message is that an APN carrying manner is incorrect, the AP side queries the Modem side for a current ESM flag. When the ESM flag is 0, the AP commands the Modem to modify the ESM flag to 1. When the ESM flag is 1, the AP commands the Modem to modify the ESM flag to 0. The Modem sends the second registration request message based on a modified ESM flag.

Specifically, the AP side and the Modem side may interact with each other by using an AT command. For example, by using an AT command, the AP side queries the current ESM flag and commands the Modem to modify the current ESM flag.

S504: The core network element sends a second registration success message to the terminal device, and correspondingly, the terminal device receives the second registration success message.

The second registration success message is sent after it is determined that the first registration request message conforms to the network configuration at the core network element side on whether an APN is carried in an Attach phase, and the terminal device successfully registers with the core network element side.

A process in which the terminal device successfully registers with the core network element side includes authentication success, which is a conventional technology. Details are not described herein again.

For example, a registration success message may be an Attach accept (Attach accept) message.

S505: The terminal device performs network connection.

For example, the Modem side may receive the second registration success message, and forward the second registration success message to the AP side. Then the AP side performs network connection.

According to the technical solution provided in this embodiment of this application, when network configuration at a network side on whether an APN is carried in an Attach phase is inconsistent with configuration at a terminal device side on whether an APN is carried to a network side in an Attach phase, after registration in a manner in which an APN is carried fails, the terminal device may automatically perform registration again in a manner in which an APN is not carried, so that network access failure can be avoided as far as possible.

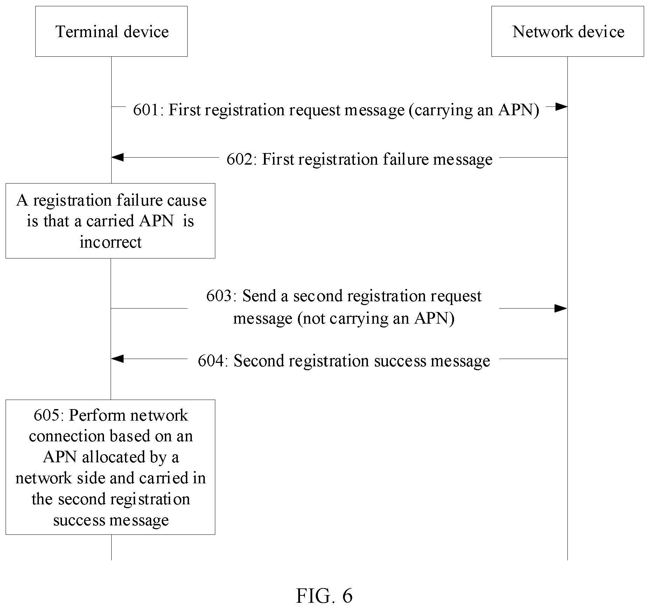

For example, FIG. 6 is a schematic flowchart of another network access method according to an embodiment of this application.

In this embodiment, an example in which a local ESM flag of a terminal device is preset to 1, and network configuration at a core network element side is that an APN is not carried in an Attach phase is used.

As shown in FIG. 6, the method includes the following steps.

S601: A terminal device sends a first registration request message, and correspondingly, a core network element receives the first registration request message.

Because the local ESM flag of the terminal device is preset to 1, the first registration request message carries an APN. For example, an Attach request message carries an APN.

In an example, the carried APN may be an APN in a preset APN list. The preset APN list may include one or more APNs. When the preset APN list includes a plurality of APNs, the plurality of APNs are configured with priorities, and the carried APN may be an APN with a highest priority in the preset APN list.

For example, a local application processor AP side of the terminal device stores the preset APN list, and a local modem Modem side of the terminal device stores the preset ESM flag. The AP side may command the local modem Modem side to initiate registration. The command may further carry information, such as an APN in the APN list. Then the Modem side sends a registration request message based on the fact that the stored ESM flag is 1, and the registration request message carries information, such as the APN, sent by the AP side.

S602: The core network element sends a first registration failure message, and correspondingly, the terminal device receives the first registration failure message.

Based on the fact that network configuration at the core network element side is that an APN is not carried in an Attach phase, it may be determined that the first registration request message does not conform to the network configuration, and therefore registration fails.

The first registration failure message carries a message that indicates a registration failure cause. For example, error code #33 may be carried in an Attach reject message, to indicate that the registration failure cause is that an APN carrying manner is incorrect.

S603: When a registration failure cause indicated in the first registration failure message is that an APN carrying manner is incorrect, the terminal device sends a second registration request message, and correspondingly, the core network element receives the second registration request message.

The second registration request message does not carry an APN.

For example, after the first registration failure message is received and it is determined that the registration failure cause indicated in the first registration failure message is that an APN carrying manner is incorrect, the ESM flag may be modified to 0, and then the second registration request message is sent based on a modified ESM flag.

For example, in this embodiment, the Modem side receives the first registration failure message, and forwards the first registration failure message to the AP side. When determining that the registration failure cause indicated in the first registration failure message is that an APN carrying manner is incorrect, the AP side queries the Modem for a current ESM flag. In this embodiment, when the current ESM flag is 1, the AP side commands the Modem side to modify the ESM flag to 0.

Specifically, the Modem and the AP may exchange the foregoing information by using an AT command. For example, by using an AT command, the AP queries the current ESM flag and commands the Modem to modify the ESM flag to 0.

S604: The core network element sends a second registration success message to the terminal device, and correspondingly, the terminal device receives the second registration success message.

The second registration success message is sent after it is determined that the first registration request message conforms to the network configuration, in which an APN is not carried in an Attach phase, at the core network element side, and the terminal device successfully registers with the core network element side.

The second registration success message carries an APN and an IP address that are allocated by a network side. For example, an Attach accept message carries an APN and an IP address allocated by the network side. The network side may preset a default APN, and the default APN is a preset APN that may be allocated to the terminal device.

For example, the terminal device does not carry an APN during registration. When the network configuration at the core network element side is that an APN is not carried in an Attach phase, after registration is initiated, the network side automatically allocates an APN to the terminal device, and further allocates an IP address to the terminal device. For example, the automatically allocated APN may be a preconfigured default APN at the core network element side, and the default APN is an APN that is preset, by the network side, to be allocated to the terminal device by default.

S605: The terminal device performs network connection based on the APN allocated by the network side and carried in the second registration success message.

For example, the Modem side may receive the second registration success message, and forward the second registration success message to the AP side. Then the AP side performs network connection.

For example, when the terminal device performs network connection based on the APN allocated by the network side, the terminal device does not need to interact with the network side. After basic configuration is performed in the terminal device, the network connection succeeds, and the network is directly accessed. The performing basic configuration includes performing user name configuration and password configuration, and performing routing configuration, and the like.

According to the technical solution provided in this embodiment of this application, when network configuration, in which an APN is not carried in an Attach phase, at a network side is inconsistent with configuration, in which an APN is carried to the network side in an Attach phase, at a terminal device side, after registration in a manner in which an APN is carried fails, the terminal device may perform registration in a manner in which an APN is not carried, so that network access failure can be avoided as far as possible.

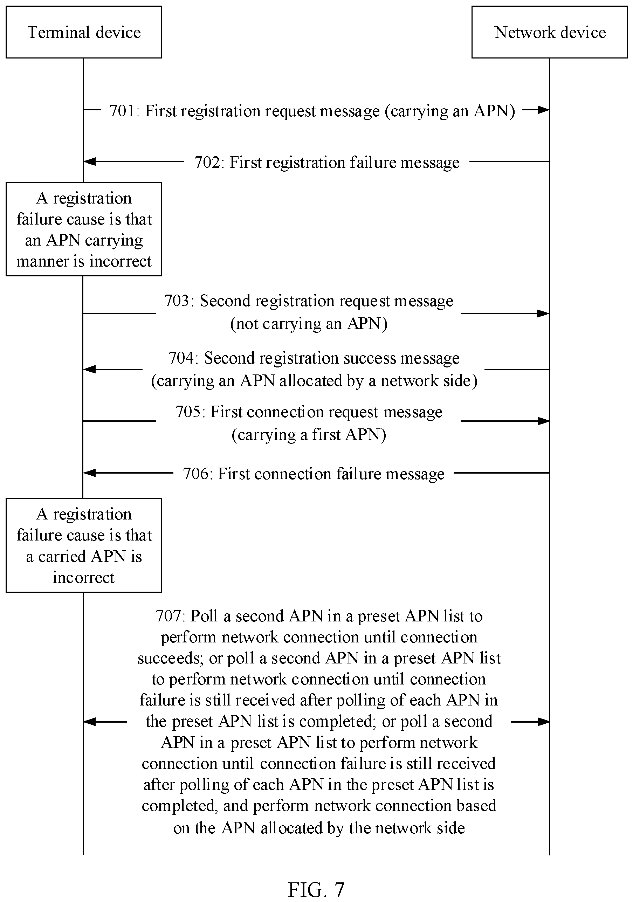

For example, FIG. 7 is a schematic flowchart of another network access method according to an embodiment of this application.

In this embodiment, an example in which a local ESM flag of a terminal device is preset to 1, and network configuration at a core network element side is that an APN is not carried in an Attach phase and a plurality of PDN connections are supported is used.

As shown in FIG. 7, the method includes the following steps.

S701 to S704 are respectively the same as S601 to S604. Details are not described herein again.

S705: The terminal device sends a first connection request message, and correspondingly, the core network element receives the first connection request message.

The first connection request message carries a first APN in a preset APN list.

For example, a connection request message may be a PDN (Packet Data Network, packet data network) connectivity request (connectivity request) message. The PDN connectivity request message may further carry a PDN type (IPv4, IPv6, IPv4v6, or the like) parameter supported by UE, and the like.

In an example, the first APN may be an APN in the preset APN list. The preset APN list may include one or more APNs. When the preset APN list includes a plurality of APNs, the plurality of APNs are configured with priorities, and the first APN may be an APN with a highest priority in the preset APN list.

For example, the local application processor AP side of the terminal device may command the local modem Modem side to initiate network connection. The command may further carry information such as the first APN. Then the Modem side sends a connection request message based on information, such as the first APN, sent by the AP side.

S706: The core network element sends a first connection failure message, and correspondingly, the terminal device receives the first connection failure message.

The first connection failure message is sent when it is determined that the first APN is incorrect.

For example, the core network element locally pre-stores an APN list, and the APN list includes one or more APNs. When the first APN is in the APN list, it is determined that the first APN is correct. When the first APN is not in the APN list, it is determined that the first APN is incorrect. For example, the preset APN list may be included in subscription data that is of the terminal device that is stored in the core network element.

For example, a connection failure message may be a PDN connectivity reject message. The connection failure message carries a message that indicates a connection failure cause. For example, error code #27 is carried in the PDN connectivity reject message, to indicate that the connection failure cause is that a carried APN is incorrect.

S707: When a connection failure cause indicated in the first connection failure message is that a carried APN is incorrect, the terminal device polls a second APN in the preset APN list to perform network connection until connection succeeds; or the terminal device polls a second APN in the preset APN list to perform network connection until connection failure is still received after polling of each APN in the preset APN list is completed; or the terminal device polls a second APN in the preset APN list to perform network connection until connection failure is still received after polling of each APN in the preset APN list is completed, and performs network connection based on the APN allocated by the network side.

For example, the Modem side may receive the first connection failure message, and forward the first connection failure message to the AP side. When determining that the connection failure cause indicated in the first connection failure message is that a carried APN is incorrect, the AP side polls to send the second APN to the Modem side until a connection success message is received, where the Modem side sends a connection request message based on the second APN; or the AP side polls to send the second APN to the Modem side until connection failure is still received after polling of each APN in the preset APN list is completed, where the Modem side sends a connection request message based on the second APN; or the AP side polls to send the second APN to the Modem side until connection failure is still received after polling of each APN in the preset APN list is completed, where the Modem side sends a connection request message based on the second APN, and performs network connection based on the APN allocated by the network side. Specifically, the AP side and the Modem side may interact with each other by using an AT command.

In an example, it is assumed that a local preset APN list of the terminal device includes an APN 1, an APN 2, and an APN 3. Each APN has a priority. APN 1 has a highest priority, APN 2 has a second highest priority, and APN 3 has a lowest priority. The preset APN list locally stored in the core network element includes the APN 3 and an APN 4. The first connection request message carries the APN 1. When the first connection failure message is received and the connection failure cause is that a carried APN is incorrect, the terminal device polls the APN 2 and the APN 3 to perform network connection until connection succeeds. A specific process of S707 includes the following steps.

S7071: The terminal device sends a second connection request message, where the second connection request message carries the APN 2, and correspondingly, the core network element receives the second connection request message.

For example, the AP side may command the Modem side to initiate network connection again. The command may further carry information such as the APN 2. Then the Modem side sends a connection request message based on information, such as the APN 2, sent by the AP side.

S7072: The core network element sends a second connection failure message, and correspondingly, the terminal device receives the second connection failure message.

The second connection failure message is sent when it is determined that the APN 2 is incorrect. Specifically, the APN 2 is not in the APN list that is locally stored in the core network element. Therefore, it is determined that the APN 2 is incorrect.

S7073: When a connection failure cause indicated in the second connection failure message is that a carried APN is incorrect, the terminal device sends a third connection request message, where the third connection request message carries the APN 3, and correspondingly, the core network element receives the third connection request message.

For example, the Modem side may receive the second connection failure message, and forward the second connection failure message to the AP side. When determining that the connection failure cause indicated in the second connection failure message is that a carried APN is incorrect, the AP side commands the Modem side to initiate connection again. The command may further carry information such as the APN 3. Then the Modem side sends a connection request message based on information, such as the APN 3, sent by the AP side.

S7074: The core network element sends a third connection success message, and correspondingly, the terminal device receives the third connection success message.

The third connection success message is sent when it is determined that the APN 3 is correct and connection succeeds. Specifically, the APN 3 is in the APN list that is locally stored in the core network element. Therefore, it is determined that the APN 3 is correct.

A process in which the terminal device is successfully connected at the network side includes allocating an IP address by the network side, establishing a bearer, and the like, which are conventional technologies. Details are not described herein again. A connection success message may be an ESM act deflt eps bearer cntxt req message, and the ESM act deflt eps bearer cntxt req message may carry an IP address allocated by a network side, and the like.

For example, the Modem side may receive the third network connection success message, and forward the third-network connection success message to the AP side.

In another example, it is assumed that a local preset APN list of the terminal device includes an APN 1, an APN 2, and an APN 3. Each APN has a priority. APN 1 has a highest priority, APN 2 has a second highest priority, and APN 3 has a lowest priority. The APN list locally stored in the core network element includes an APN 4 and an APN 5. The first connection request message carries the APN 1. When the first connection failure message is received and the connection failure cause is that a carried APN is incorrect, the terminal device polls the APN 2 and the APN 3 to perform network connection until connection failure is still received after polling of the APN 2 and the APN 3 is completed. A specific process of S707 includes the following steps.

S7075: The terminal device sends a second connection request message, where the second connection request message carries the APN 2, and correspondingly, the core network element receives the second connection request message.

For example, the AP side may command the Modem side to initiate connection again. The command may further carry information such as the APN 2. Then the Modem side sends a connection request message based on information, such as the APN 2, sent by the AP side.

S7076: The core network element sends a second connection failure message, and correspondingly, the terminal device receives the second connection failure message.

The second connection failure message is sent when it is determined that the APN 2 is incorrect. Specifically, the APN 2 is not in the APN list that is locally stored in the core network element. Therefore, it is determined that the APN 2 is incorrect.

S7077: The terminal device sends a third connection request message, where the third connection request message carries the APN 3, and correspondingly, the core network element receives the third connection request message.

For example, the Modem side may receive the second connection failure message, and forward the second connection failure message to the AP side. When determining that the connection failure cause indicated in the second connection failure message is that a carried APN is incorrect, the AP side commands the Modem side to initiate connection again. The command may further carry information such as the APN 3. Then the Modem side sends a connection request message based on information, such as the APN 3, sent by the AP side.

S7078: The core network element sends a third connection failure message, and correspondingly, the terminal device receives the third connection failure message.

The third connection failure message is sent when it is determined that the APN 3 is incorrect. Specifically, the APN 3 is not in the APN list that is locally stored in the core network element. Therefore, it is determined that the APN 3 is incorrect.

S7079: The terminal device determines that polling is completed and connection fails.

For example, the Modem side may receive the third connection failure message, and forward the third connection failure message to the AP side. When determining that a connection failure cause indicated in the second connection failure message is that a carried APN is incorrect, the AP side determines that polling is completed and connection fails.

In a possible implementation, S7079 may alternatively be implemented in another manner. In other words, the terminal device determines that connection failure is still received after polling of the APN 2 and the APN 3, and performs network connection based on the APN allocated by the network side and carried in the second registration success message.

For example, the Modem side may receive the third connection failure message, and forward the third connection failure message to the AP side. When determining that a network connection failure cause indicated in the second connection failure message is that a carried APN is incorrect, the AP side determines that polling is completed, and performs network connection based on the APN allocated by the network side and carried in the second registration success message.

For example, when the terminal device performs network connection based on the APN allocated by the network side, the terminal device does not need to interact with the network side. After basic configuration is performed in the terminal device, network connection succeeds, and the network is directly accessed. The performing basic configuration includes performing user name configuration and password configuration, and performing routing configuration, and the like.

For example, a counter is locally configured in the terminal device, and an original value of the counter may be a quantity of second APNs. When an APN is polled, a count value of the counter may automatically decrease by 1 until a count value of the counter is 0. When a count value of the counter is 0, it is indicated that polling is completed.

According to the technical solution provided in the embodiment shown in FIG. 6, when network connection is performed based on an APN allocated by a network side, only a data network connection that is corresponding to an access point name that is preset by the network side can be established, and some APNs that are preset by the network side can only be used to access a specific network, causing limited network access of a user equipment. However, in the technical solution provided in this embodiment of this application, a PDN connection may be established based on an APN in the preset APN list, so that diversified network access requirements of a user equipment can be met. In addition, after connection in a manner in which the first APN is carried fails, the second APN in the preset APN list is polled to perform network connection, so that network access failure can be avoided as far as possible.

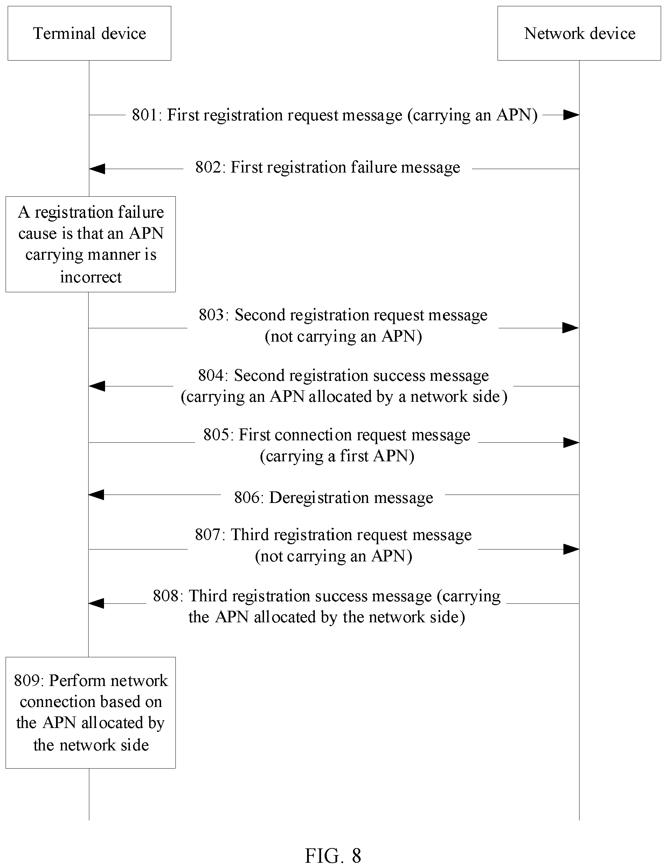

For example, FIG. 8 is a schematic flowchart of another network access method according to an embodiment of this application.

In this embodiment, an example in which a local ESM flag of a terminal device is preset to 1, and network configuration at a core network element side is that an APN is not carried in an Attach phase and a plurality of PDN connections are not supported is used.

As shown in FIG. 8, the method includes the following steps.

S801 to S804 are respectively the same as S601 to S604. Details are not described herein again.

S805: The terminal device sends a first connection request message, and correspondingly, the core network element receives the first connection request message.

The first connection request message carries a first APN in a preset APN list.

For example, a connection request message may be a PDN (Packet Data Network, packet data network) connectivity request (connectivity request) message. The PDN connectivity request message may further carry a PDN type (IPv4, IPv6, IPv4v6, or the like) parameter supported by UE, and the like.

In an example, the first APN may be an APN in the preset APN list. The preset APN list may include one or more APNs. When the preset APN list includes a plurality of APNs, the plurality of APNs are configured with priorities, and the first APN may be an APN with a highest priority in the preset APN list.

For example, the local application processor AP side of the terminal device may command the local modem Modem side to initiate network connection. The command may further carry information such as the first APN. Then the Modem side sends a connection request message based on information, such as the first APN, sent by the AP side.

S806: The core network element sends a deregistration message, and correspondingly, the terminal device receives the deregistration message.

The deregistration message is sent when it is determined that a connection to a PDN is established and the network side does not support a plurality of PDN connections. For example, whether the core network element supports a plurality of PDN connections may be preconfigured. Supporting a plurality of PDN connections means that the terminal device is allowed to establish a plurality of PDN connections, and not supporting a plurality of PDN connections means that the terminal device is allowed to establish one PDN connection, and is not allowed to establish a plurality of PDN connections.

Specifically, after the second registration success message is received, because the second registration success message carries the IP address allocated by the network side, it is equivalent to that a PDN connection is established on the network side. Carrying the first APN during network connection is equivalent to requesting to establish a new PDN connection. When the network side is preconfigured to not support a plurality of PDN connections, the terminal device is deregistered. A deregistration message may be a Detach request message.

S807: The terminal device sends a third registration request message, and correspondingly, the core network element receives the third registration request message.

The third registration request message does not carry an APN.

Specifically, because the ESM flag is modified to 0, the third registration request message does not carry an APN, and registration is performed again.

For example, the local Modem side of the terminal device may receive the registration message, and forward the deregistration message to the local application processor AP side, and the AP side commands the Modem side to initiate registration again.

S808: The core network element sends a third registration success message to the terminal device, and correspondingly, the terminal device receives the third registration success message.

The third registration success message is sent after it is determined that the third registration request message conforms to the network configuration, in which an APN is not carried in an Attach phase, at the core network element side, and the terminal device successfully registers with the core network element side.

The third registration success message carries an APN and an IP address that are allocated by the network side. For example, an Attach accept message carries an APN and an IP address allocated by the network side.

S809: The terminal device performs network connection based on the APN allocated by the network side and carried in the third registration success message.

For example, the local Modem side of the terminal device may receive the second registration success message, and forward the second registration success message to the AP side. Then the AP side performs network connection.

Specifically, when the terminal device performs network connection based on the APN allocated by the network side, the terminal device does not need to interact with the network side. After basic configuration is performed in the terminal device, the network connection succeeds, and the network is directly accessed. The performing basic configuration includes performing user name configuration and password configuration, and performing routing configuration, and the like.

According to the technical solution provided in this embodiment of this application, after deregistration and after registration succeeds again in a manner in which an APN is carried, the network connection is directly performed based on the APN allocated by the network side, so that network access failure can be avoided as far as possible.

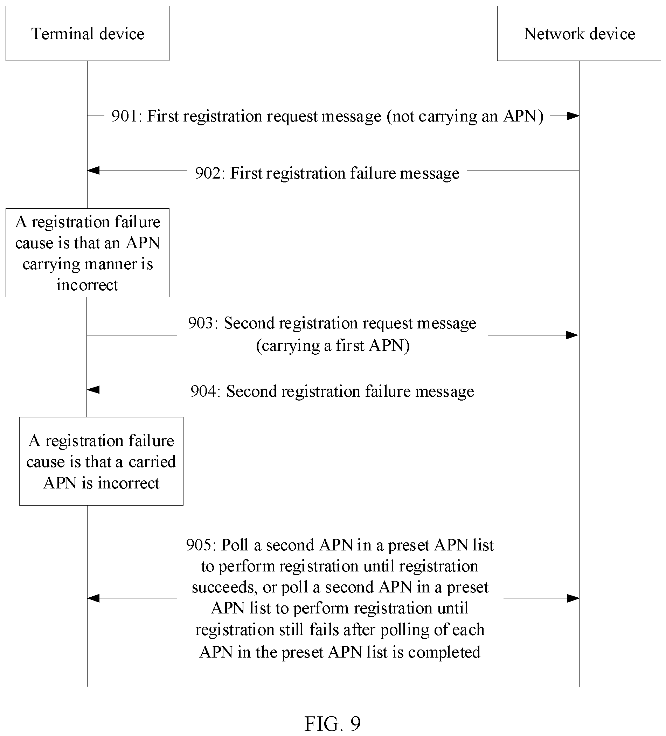

For example, FIG. 9 is a schematic flowchart of another network access method according to an embodiment of this application.

In this embodiment, an example in which a local ESM flag of a terminal device is preset to 0, and network configuration at a core network element side is that an APN is carried in an Attach phase is used.

As shown in FIG. 9, the method includes the following steps.

S901: A terminal device sends a first registration request message, and correspondingly, a core network element receives the first registration request message.

If a local ESM flag of a terminal device is 0, the first registration request message does not carry an APN.

For example, a local application processor AP side of the terminal device may command a local modem Modem side to initiate registration. Then the Modem side sends a registration request message based on the fact that a stored ESM flag is 0.

S902: The core network element sends a first registration failure message, and correspondingly, the terminal device receives the first registration failure message.

Based on the fact that network configuration at the core network element side is that an APN is not carried in an Attach phase, it may be determined that the first registration request message does not conform to the network configuration, and therefore registration fails.

The registration failure message carries a message that indicates a registration failure cause. For example, error code #33 is carried in the first registration failure message, to indicate that the registration failure cause is that an APN carrying manner is incorrect.

S903: When a registration failure cause indicated in the first registration failure message is that an APN carrying manner is incorrect, the terminal device sends a second registration request message, and correspondingly, the core network element receives the second registration request message.

The second registration request message carries a first APN in a preset APN list.

For example, after the first registration failure message is received and it is determined that the registration failure cause indicated in the first registration failure message is that an APN carrying manner is incorrect, the ESM flag may be modified to 1, and then the second registration request message is sent based on a modified ESM flag.

For example, in this embodiment, the Modem side receives the first registration failure message, and forwards the first registration failure message to the AP side. When determining that the registration failure cause indicated in the first registration failure message is that an APN carrying manner is incorrect, the AP side queries the Modem for a current ESM flag. When the ESM flag is 0, the AP commands the Modem to modify the ESM flag to 1. When the ESM flag is 1, the AP commands the Modem to modify the ESM flag to 0. The Modem sends the second registration request message based on a modified ESM flag.

Specifically, the Modem and the AP may exchange the foregoing information by using an AT command. For example, specifically, the Modem and the AP may exchange the foregoing information by using an AT command. For example, by using an AT command, the AP queries the current ESM flag and commands the Modem to modify the ESM flag to 1.

In addition, when the queried current ESM flag is 0, before the Modem is commanded to modify the current ESM flag to 1, the method may further include: The AP sends a command for setting an APN parameter to the Modem, where the command may carry the APN parameter and the APN parameter includes the first APN and information such as a user name and a password that are corresponding to the first APN, and the Modem stores the APN parameter and sends a setting success response to the AP.

For example, the preset APN list may include one or more APNs. When the preset APN list includes a plurality of APNs, the plurality of APNs are configured with priorities, and the first APN may be an APN with a highest priority in the preset APN list.

S904: The core network element sends a second registration failure message, and correspondingly, the terminal device receives the second registration failure message.

The registration failure message carries a message that indicates a registration failure cause. For example, error code #27 is carried in the second registration failure message, to indicate that the registration failure cause is that a carried APN is incorrect.

For example, the core network element locally pre-stores an APN list, and the APN list includes one or more APNs. When the first APN is in the APN list, it is determined that the first APN is correct. When the first APN is not in the APN list, it is determined that the first APN is incorrect.

For example, a registration failure message may be an Attach reject message. The registration failure message carries a message that indicates a registration failure cause. For example, error code #27 is carried in the Attach reject message, to indicate that the registration failure cause is that a carried APN is incorrect.

S905: When a registration failure cause indicated in the second registration failure message is that a carried APN is incorrect, the terminal device polls a second APN in the preset APN list to perform registration until registration succeeds, or polls a second APN in the preset APN list to perform registration until registration still fails after polling of each APN in the preset APN list is completed.

For example, the local Modem side of the terminal device may receive the second registration failure message, and forward the second registration failure message to a local application processor AP side. When determining that the registration failure cause indicated in the second registration failure message is that a carried APN is incorrect, the AP polls to send information such as the second APN to the Modem until a registration success message is received, where the Modem sends a registration request message based on the received information such as the second APN, or the AP polls to send information such as the second APN to the Modem until registration still fails after polling of the second APN is completed, where the Modem sends a registration request message based on the received information such as the second APN. Specifically, the AP side and the Modem side may interact with each other by using an AT command.

For example, it is assumed that a local preset APN list of the terminal device includes an APN 1, an APN 2, and an APN 3. Each APN has a priority. APN 1 has a highest priority, APN 2 has a second highest priority, and APN 3 has a lowest priority. The APN list locally stored in the core network element includes the APN 3 and an APN 4.

Based on the foregoing content, in an example, the second registration request message carries the APN 1. When the second registration failure message is received and the registration failure cause is that a carried APN is incorrect, the terminal device polls the APN 2 and the APN 3 to perform registration until registration succeeds. A specific process includes the following steps.

S9051: The terminal device sends a third registration request message, and correspondingly, the core network element receives the third registration request message.

The third registration request message carries the APN 2.

For example, the local application processor AP side of the terminal device may command the local modem Modem side to initiate registration again. The command may further carry information such as the APN 2. Then the Modem side sends a registration request message based on information, such as the APN 2, sent by the AP side.

S9052: The core network element sends a third registration failure message, and correspondingly, the terminal device receives the third registration failure message.

The third registration failure message is sent when it is determined that the AP 2 is incorrect. For example, when it is determined that the APN 2 is not in the APN list stored in the core network element, it is determined that the AP 2 is incorrect.

S9053: The terminal device sends a fourth registration request message, and correspondingly, the core network element receives the fourth registration request message.

The fourth registration request message carries the APN 3.

For example, the local Modem side of the terminal device may receive the third registration failure message, and forward the third registration failure message to the local application processor AP side. When determining that a registration failure cause indicated in the third registration failure message is that a carried APN is incorrect, the local application processor AP side of the terminal device commands the local Modem side to initiate registration again. The command may further carry information such as the APN 3. Then the Modem side sends the registration request message based on information, such as the APN 3, sent by the AP side.

S9054: The core network element sends a third registration success message, and correspondingly, the terminal device receives the third registration success message.

In a possible implementation, after S9054, the method may further include the following steps.

S9055: The terminal device performs network connection based on the APN 3.

For example, the local Modem side of the terminal device may receive the third connection success message, and forward the third connection success message to the local application processor AP side, and the AP side performs network connection based on the APN 3.

Specifically, when the terminal device performs network connection based on the APN 3, the terminal device does not need to interact with the network side. After basic configuration is performed in the terminal device, the network connection succeeds, and the network is directly accessed. The performing basic configuration includes performing user name configuration and password configuration, and performing routing configuration, and the like.

In another example, the second registration request message carries the APN 1. When the second registration failure message is received and the registration failure cause is that a carried APN is incorrect, the terminal device polls the APN 2 and the APN 3 to perform registration until registration still fails after polling of the APN 2 and the APN 3 is completed. A specific process includes the following steps.

S9056: The terminal device sends a third registration request message, and correspondingly, the core network element receives the third registration request message.

The third registration request message carries the APN 2.

For example, the local application processor AP side of the terminal device may command the local modem Modem side to initiate registration again. The command may further carry information such as the APN 2. Then the Modem side sends a registration request message based on information, such as the APN 2, sent by the AP side.

S9057: The core network element sends a third registration failure message, and correspondingly, the terminal device receives the third registration failure message.

The third registration failure message is sent when it is determined that the AP 2 is incorrect. For example, when it is determined that the APN 2 is not in the APN list stored in the core network element, it is determined that the AP 2 is incorrect.

S9058: The terminal device sends a fourth registration request message, and correspondingly, the core network element receives the fourth registration request message.

The fourth registration request message carries the APN 3.

For example, the local Modem side of the terminal device may receive the third registration failure message, and forward the third registration failure message to the local application processor AP side. When determining that a registration failure cause indicated in the third registration failure message is that a carried APN is incorrect, the local application processor AP side of the terminal device commands the local Modem side to initiate registration again. The command may further carry information such as the APN 3. Then the Modem side sends the registration request message based on information, such as the APN 3, sent by the AP side.

S9059: The core network element sends a fourth registration failure message, and correspondingly, the terminal device receives the fourth registration failure message.

The fourth registration failure message is sent when it is determined that the AP 3 is incorrect. For example, when it is determined that the APN 3 is not in the APN list stored in the core network element, it is determined that the AP 3 is incorrect.

S90510: The terminal device determines that polling is completed and registration fails.

For example, the local Modem side of the terminal device may receive the fourth registration failure message, and forward the fourth registration failure message to the local application processor AP side. When determining that a registration failure cause indicated in the fourth registration failure message is that a carried APN is incorrect, the local application processor AP side of the terminal device determines that polling is completed and network connection fails.

According to the technical solution provided in this embodiment of this application, after registration in a manner in which an APN is carried fails, registration is performed again in a manner in which an APN is not carried. When registration fails due to an incorrect APN, another APN is polled to perform registration, so that network access failure can be avoided as far as possible.

Based on the foregoing content, the following describes a structure of a network access apparatus that performs the foregoing network access method.

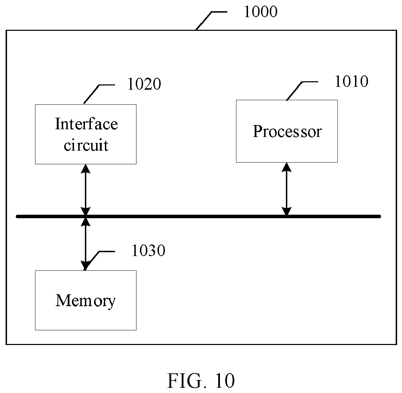

For example, FIG. 10 is a schematic diagram of a structure of a network access apparatus according to an embodiment of this application. The network access apparatus may be configured to implement functions of any one of the foregoing method embodiments and therefore may implement beneficial effects of the foregoing method embodiments.

As shown in FIG. 10, a network access apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the network access apparatus 1000 may further include a memory 1030, configured to store instructions executed by the processor 1010, store input data required by the processor 1010 to run instructions, or store data generated after the processor 1010 runs instructions.

When the network access apparatus is a chip used in a terminal device, the terminal chip implements functions of an AP side and a modem side in the foregoing method embodiments.

According to the technical solutions provided in the foregoing embodiments, when a carrier network is updated or changed, causing a change in network configuration, a terminal device may adapt to a network and implement network connection. This reduces an occurrence of a live network connection failure problem and even an accident, omits complex steps such as problem locating, version refreshing, live network upgrading, and the like, and saves manpower and material resources. In addition, the subnets with different network configurations of a carrier may use a same software version. This helps with testing and maintaining a live network version and reduces an occurrence of the live network connection failure problem.

It may be understood that the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general purpose processor may be a microprocessor, or may be any conventional processor.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in a base station or a terminal as discrete components.

Based on the foregoing embodiments, an embodiment of this application further provides a network access apparatus. The apparatus includes a module configured to perform any one of the methods in any one of the foregoing embodiments.

Based on the foregoing embodiments, an embodiment of this application further provides a computer storage medium. The storage medium stores a software program. When the software program is read and executed by one or more processors, the method provided in any one of the foregoing embodiments may be implemented. The computer storage medium may include any medium that can store program code, such as a USB flash drive, a removable hard disk, a read-only memory, a random access memory, a magnetic disk, or an optical disc.

Based on the foregoing embodiments, an embodiment of this application further provides a computer program product that includes instructions. When the instructions are run on a computer, the computer performs the method in any one of the foregoing embodiments.

Based on the foregoing embodiments, an embodiment of this application further provides a chip. The chip includes a processor, configured to implement functions of the method provided in any one or more of the foregoing embodiments. Optionally, the chip further includes a memory. The memory is configured to store necessary program instructions and data that are executed by the processor. The chip may include a chip, or may include a chip and another discrete device.

The foregoing embodiments may be implemented completely or partially by software, hardware, firmware, or any combination thereof. When software is used to implement the foregoing embodiments, the foregoing embodiments may be implemented completely or partially by a computer program product. The computer program product includes one or more computer programs or instructions. When the computer programs or instructions are loaded and executed on a computer, the procedures or functions in embodiments of this application are completely or partially performed. The computer may be a general-purpose computer, a dedicated computer, a computer network, a network device, a personnel device, or another programmable apparatus. The computer programs or instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state drive. The computer-readable storage medium may be a volatile or non-volatile storage medium, or may include both volatile and non-volatile types of storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A network access method, wherein the method is applied to a network access apparatus, and the method comprises:
sending a first registration request message;
receiving a first registration failure message;
sending a second registration request message when a registration failure cause indicated in the first registration failure message is that a manner of carrying an access point name APN is incorrect; and
when a second registration success message is received, performing network connection, wherein
when the first registration request message carries an APN, the second registration request message does not carry an APN; or when the first registration request message does not carry an APN, the second registration request message carries an APN.

2. The method according to claim 1, wherein when the first registration request message carries an APN and the second registration request message does not carry an APN, the second registration success message carries an APN allocated by a network side.

3. The method according to claim 2, wherein the performing network connection comprises:
sending a first connection request message, wherein the first connection request message carries a first APN in a preset APN list;
receiving a first connection failure message; and
when a connection failure cause indicated in the first connection failure message is that a carried APN is incorrect, polling a second APN in the preset APN list to perform network connection until connection succeeds; or polling a second APN in the preset APN list to perform network connection until connection failure is still received after polling of each APN in the preset APN list is completed; or polling a second APN in the preset APN list to perform network connection until connection failure is still received after polling of each APN in the preset APN list is completed, and performing the network connection based on the APN allocated by the network side, wherein the second APN is an APN other than the first APN in the preset APN list.

4. The method according to claim 2, wherein the performing network connection comprises:
sending a first connection request message, wherein the first connection request message carries a first APN in a preset APN list;
receiving a deregistration message;
sending a third registration request message, wherein the third registration request message does not carry an APN;
receiving a third registration success message, wherein the third registration success message carries the APN allocated by the network side; and
performing network connection based on the APN allocated by the network side.

5. The method according to claim 2, wherein the performing network connection comprises:
performing network connection based on the APN allocated by the network side.

6. The method according to claim 1, wherein when the first registration request message does not carry an APN and the second registration request message carries an APN, the second registration request message carries a first APN in a preset APN list.

7. The method according to claim 6, wherein the performing network connection comprises:
performing network connection based on the first APN.

8. The method according to claim 6, wherein after the sending a second registration request message, the method further comprises:
when a second registration failure message is received and a registration failure cause indicated in the second registration failure message is that a carried APN is incorrect, polling a second APN in the preset APN list to perform registration until registration succeeds, or polling a second APN in the preset APN list to perform registration until registration still fails after polling of each APN in the preset APN list is completed, wherein the second APN is an APN other than the first APN in the preset APN list.

9. The method according to claim 8, wherein after the polling a second APN in the preset APN list to perform registration until registration succeeds, the method further comprises:
performing network connection based on the second APN corresponding to the successful registration.

10. The method according to any one of claims 1 to 9, wherein the receiving a first registration failure message comprises:
receiving, by a local modem Modem, the first registration failure message, and forwarding the first registration failure message to a local application processor AP; and
the sending a second registration request message when a registration failure cause indicated in the first registration failure message is that an APN carrying manner is incorrect comprises:
when the AP determines that the registration failure cause indicated in the first registration failure message is that the APN carrying manner is incorrect, querying the Modem for an evolved packet system session management flag ESM flag, wherein when the ESM flag is 0, the ESM flag indicates that an APN is not carried when an registration request message is sent, or when the ESM flag is 1, the ESM flag indicates that an APN is carried when an registration request message is sent; and
when the ESM flag is 0, commanding, by the AP, the Modem to modify the ESM flag to 1; or
when the ESM flag is 1, commanding, by the AP, the Modem to modify the ESM flag to 0; and
sending, by the Modem, the second registration request message based on a modified ESM flag.

11. The method according to any one of claims 1 to 10, wherein the network access apparatus supports access to at least one of a long term evolution LTE network and a fifth generation mobile communication 5G network.

12. A network access apparatus, wherein the apparatus comprises:
a processor and a memory, wherein
the memory is configured to store a computer-executable program, and
the processor is configured to execute the computer-executable program stored in the memory, so that the method according to any one of claims 1 to 11 is performed.

13. A network access apparatus, comprising a module configured to perform the method according to any one of claims 1 to 11.

14. A computer-readable storage medium, wherein the computer-readable storage medium comprises a computer program, and when the computer program is run on an electronic device, the electronic device is enabled to perform the method according to any one of claims 1 to 11.

15. A computer program product, wherein when the computer program product runs on a computer, the computer is enabled to perform the method according to any one of claims 1 to 11.
